(19) Europäisches Patentamt
European Patent Office
Office européen des brevets

(11) EP 2 518 470 A1

(12) EUROPEAN PATENT APPLICATION
published in accordance with Art. 153(4) EPC

(43) Date of publication:
31.10.2012 Bulletin 2012/44

(51) Int Cl.:
G01N 17/00 (2006.01)    G01M 99/00 (2011.01)
G21C 17/00 (2006.01)    G21C 17/003 (2006.01)
G21D 1/00 (2006.01)

(21) Application number: 10839562.5

(22) Date of filing: 24.12.2010

(86) International application number:
PCT/JP2010/073364

(87) International publication number:
WO 2011/078333 (30.06.2011 Gazette 2011/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 25.12.2009 JP 2009296151

(71) Applicant: Mitsubishi Heavy Industries, Ltd.
Tokyo 108-8215 (JP)

(72) Inventors:
• OGAWA, Naoki
Tokyo 108-8215 (JP)
• KOBAYASHI, Takaaki
Tokyo 108-8215 (JP)
• MATSUBARA, Nariyasu
Tokyo 108-8215 (JP)

(74) Representative: HOFFMANN EITLE
Patent- und Rechtsanwälte
Arabellastrasse 4
81925 München (DE)

(54) NUCLEAR-POWER-PLANT SOUNDNESS EVALUATION SYSTEM

(57) The present invention is characterized in that the soundness evaluation accuracy is improved and an appropriate maintenance measure can be provided on the basis of the evaluation result. A nuclear-power-plant soundness evaluation system(10) including a stress-distribution calculating unit (11) that outputs a stress distribution and an identified crack generating part; a crack-growth prediction unit (12) that predicts how the crack will grow from the crack generating part; and a soundness maintenance unit (13) that has a maintenance database (15) in which crack-growth prediction results and maintenance measures are associated and reads out from the maintenance database (15) a maintenance measure corresponding to the crack-growth prediction result and presents the read-out maintenance information to a user.

FIG. 3

10 ; SOUNDNESS EVALUATION SYSTEM

EP 2 518 470 A1

## Description

{Technical Field}

The present invention relates to soundness evaluation in nuclear power plants.

{Background Art}

In recent years, in nuclear power plants, stress corrosion cracking (SCC) of metallic materials used in structures and pipes has become a problem. Stress corrosion cracking is a fracture phenomenon that occurs when corrosion and tensile stress simultaneously act on metallic materials. The larger the stress, the more quickly the event may become evident.

There is a known method for evaluating stress corrosion cracking in the related art in which the susceptibility to stress corrosion cracking and lifetime are evaluated on the basis of the hardness of a structural member (for example, see PTL 1). In this method, the correlation between the hardness of a structural member and the level of stress corrosion cracking is noted, and the susceptibility to stress corrosion cracking and the lifetime of the structural member are evaluated using this correlation.

{Citation List}

{Patent Literature}

{PTL 1} Japanese Unexamined Patent Application, Publication No. 2004-340898

{Summary of Invention}

{Technical Problem}

However, there is an inconvenience in the above related art, in which the susceptibility to stress corrosion cracking is evaluated on the basis of the hardness, in that only stress corrosion cracking occurring near the surface of the structural member, for example, occurring at a position several millimeters inward from the surface, can be evaluated, and corrosion cracking occurring at a deeper position cannot be evaluated.

Furthermore, although the growth level of stress corrosion cracking varies depending on the usage environment (temperature, pressure, etc.), there is a problem with the above related art, in which a crack is determined from the hardness of the structural member, in that evaluation taking the usage environment into consideration is difficult.

Furthermore, in the conventional nuclear power plant operation, when a crack is generated, it is mandatory for a plant to immediately stop the operation, investigate the cause, and perform repair, regardless of the level of the crack.

However, in recent years, taking into consideration the operational efficiency of plants, a new standard has been established that, even if a crack is found, the operation is continued for a term for which the soundness of the plant can be ensured, leaving the crack as it is. In the case where this standard is applied, crack-growth prediction needs to be performed as accurately as possible, and appropriate maintenance measures have to be taken at an appropriate time, according to the crack-growth prediction result.

The present invention has been made in view of the above-described circumstances, and an object thereof is to provide a nuclear-power-plant soundness evaluation system that can improve the soundness evaluation accuracy and can provide an appropriate maintenance measure according to evaluation results.

{Solution to Problem}

To solve the above-described problems, the present invention employs the following solutions.

The present invention provides a nuclear-power-plant soundness evaluation system including a stress-distribution calculating unit that calculates a residual stress distribution in a soundness evaluation structure and that, when it is determined that a crack will occur on the basis of the stress distribution, outputs the calculated stress distribution and an identified crack generating part; a crack-growth prediction unit that predicts how the crack will grow from the crack generating part, on the basis of the information about the stress distribution and the identified crack generating part output from the stress-distribution calculating unit, and outputs a prediction result; and a soundness maintenance unit that has a database in which crack-growth prediction results and maintenance measures are associated, reads out from the database a maintenance measure corresponding to the crack-growth prediction result output from the crack-growth prediction unit, and presents the read-out maintenance information to a user.

With the present invention, the stress-distribution calculating unit calculates a residual stress distribution in the evaluation structure, and whether or not a crack will be generated is determined on the basis of this stress distribution. If it is determined that a crack will be generated, the crack-growth prediction unit performs crack-growth prediction based on the stress distribution. In this manner, because the stress-distribution calculating unit obtains the residual stress distribution continuous from the inside to the surface of the evaluation structure taking into consideration the environment in which the evaluation structure is used, the crack-growth prediction accuracy can be improved by predicting whether or not a crack will be generated and how the crack will grow, on the basis of this stress distribution. Furthermore, this enables more accurate lifetime evaluation. In addition, because the soundness maintenance unit reads out from the database an appropriate maintenance measure corresponding to this crack-growth prediction result and presents it to a user, it is possible to take an appropriate maintenance measure suitable for the current and future crack growth in the evaluation structure. Furthermore, the operational efficiency of the plant can be increased because the present invention allows the choice of a maintenance measure that the operation can be continued and repair may be performed in the future depending on the level of crack growth. In this case, because the preparation for repair can be performed by the time the repair is actually carried out, the working term required for the repair can be reduced.

In the above-described nuclear-power-plant soundness evaluation system, the stress-distribution calculating unit may have a database in which groups and stress distributions are stored in association with each other, the groups being formed by, when a plurality of identical structures exist, performing elasticity analysis on these structures in advance and grouping the structures with similar elasticity analysis results, and the stress distributions being obtained by performing elasto-plastic analysis on a structure in each group. The residual stress distribution in the soundness evaluation structure may be acquired from the database.

In this manner, because the elasticity analysis is performed on a plurality of structures, the structures exhibited similar elasticity analysis results are grouped, and elasto-plastic analysis is performed on each group in advance to obtain stress distributions, it is only necessary to acquire the information from the database in the actual stress distribution calculation. Accordingly, it is possible to easily and quickly acquire the stress distribution.

In the above-described nuclear-power-plant soundness evaluation system, the stress-distribution calculating unit may obtain the residual stress distribution by assuming that the residual stress in the soundness evaluation structure is equivalent to the yield stress.

As above, by assuming that the stress distribution is equivalent to the yield stress, the need for the stress calculation is eliminated, achieving a significant reduction in time.

{Advantageous Effects of Invention}

The present invention has advantages in that the soundness evaluation accuracy is improved and an appropriate maintenance measure can be provided on the basis of the evaluation result.

{Brief Description of Drawings}

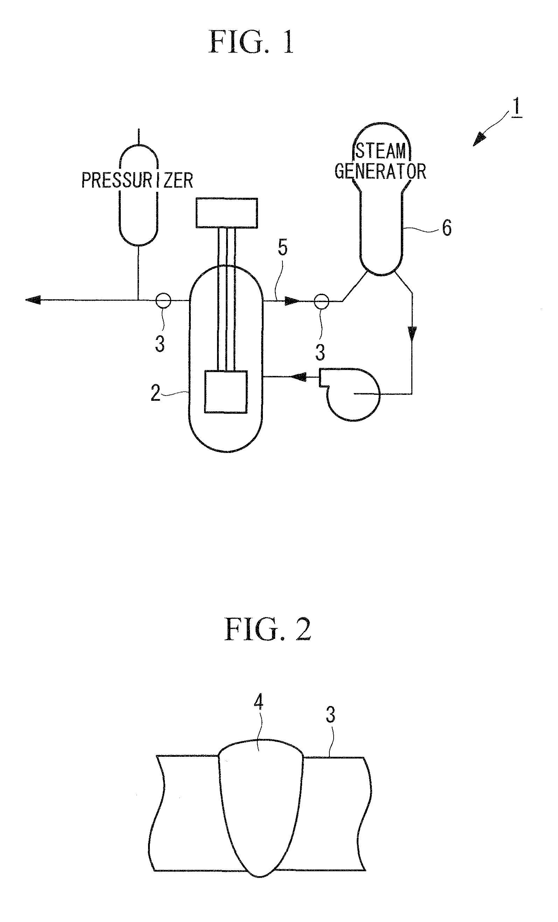

{FIG. 1} FIG. 1 is a schematic diagram of the configuration of an example of a nuclear power plant.

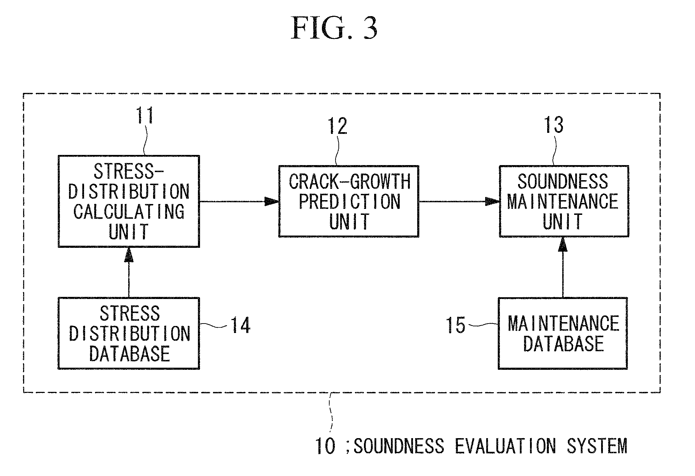

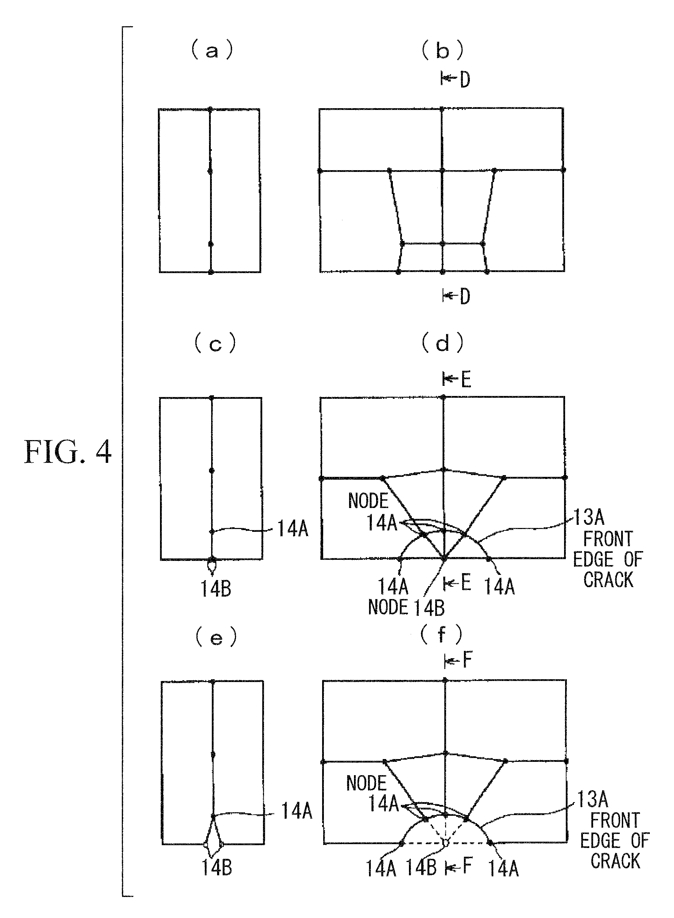

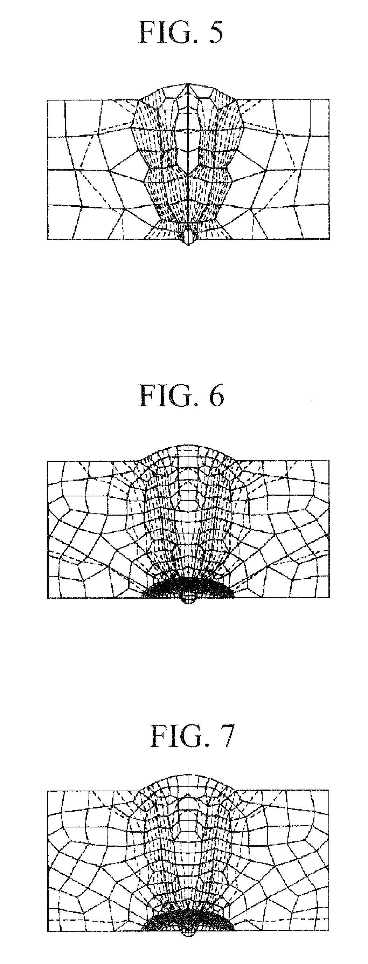

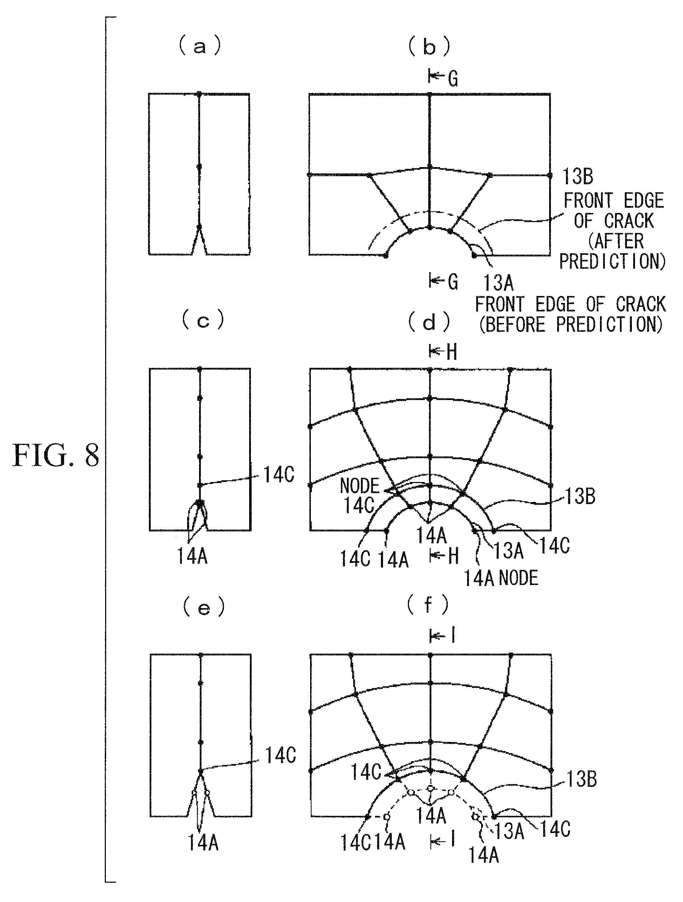

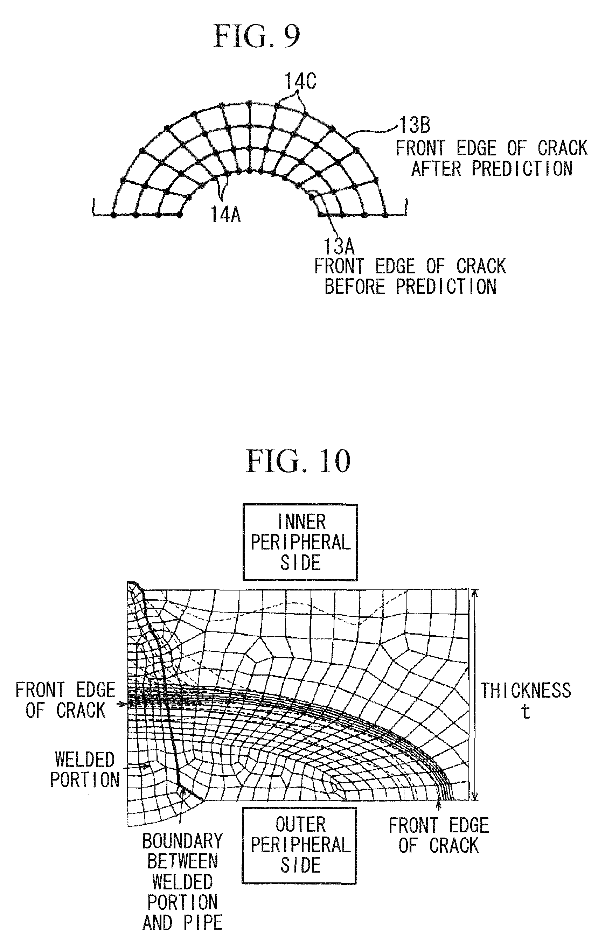

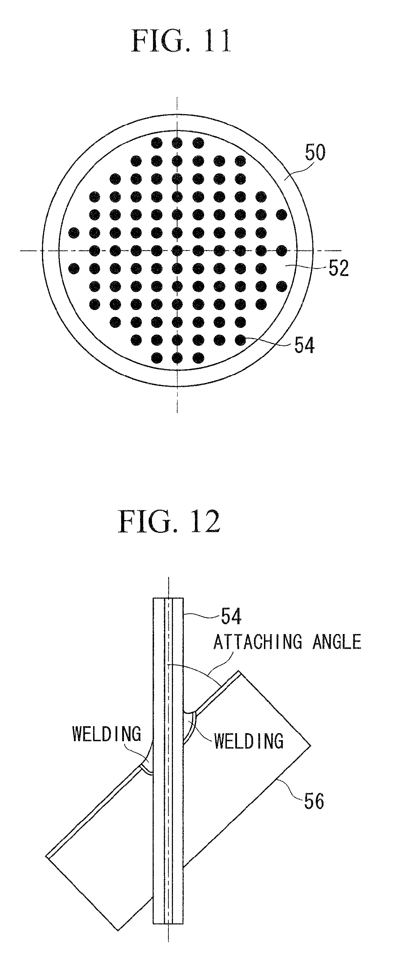

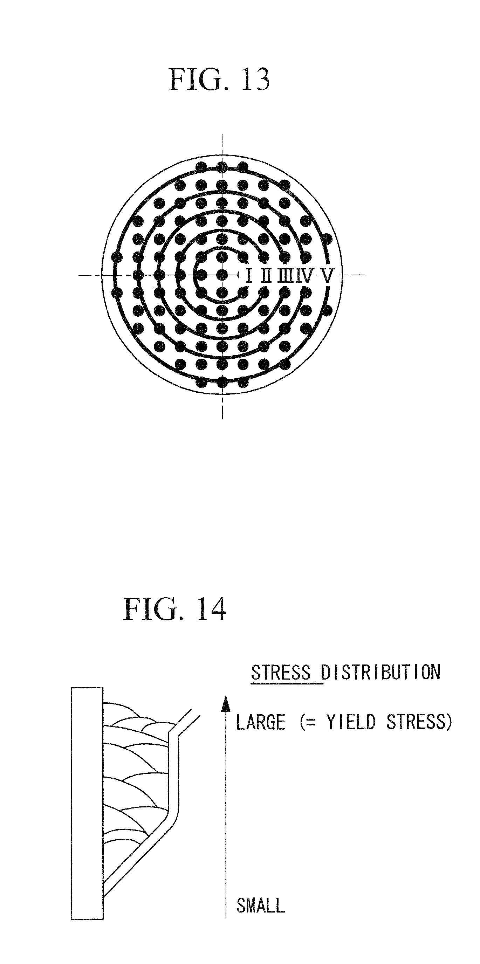

{FIG. 2} FIG. 2 is a diagram showing an example of an evaluation structure of a nuclear-power-plant soundness evaluation system according to a first embodiment of the present invention.
{FIG. 3} FIG. 3 is a diagram showing the configuration of the nuclear-power-plant soundness evaluation system according to the first embodiment of the present invention.
{FIG. 4} FIG. 4 includes schematic diagrams showing mesh division performed in a stress-distribution calculating unit and a crack-growth prediction unit shown in FIG. 3.
{FIG. 5} FIG. 5 is a diagram showing an example of mesh division performed in the stress-distribution calculating unit shown in FIG. 3 and a residual stress distribution calculated using the mesh division.
{FIG. 6} FIG. 6 is a diagram showing an example of mesh division performed in the crack-growth prediction unit shown in FIG. 3 and an initial residual stress distribution superposed on the mesh division.
{FIG. 7} FIG. 7 is a diagram showing an example of mesh division performed in the crack-growth prediction unit shown in FIG. 3 and a residual stress distribution calculated using the mesh division.
{FIG. 8} FIG. 8 includes example diagrams showing the crack growth predicted by the crack-growth prediction unit shown in FIG. 3.
{FIG. 9} FIG. 9 is a diagram for describing the mesh division performed in the crack-growth prediction unit shown in FIG. 3.
{FIG. 10} FIG. 10 is a diagram showing an example of mesh division and stress distribution when a crack has grown to half the thickness of a pipe.
{FIG. 11} FIG. 11 is a schematic view of core instrumentation pipes supported by a lower head, viewed from the bottom of a vessel.
{FIG. 12} FIG. 12 is a schematic cross-sectional view showing the core instrumentation pipes welded to a reactor bottom.
{FIG. 13} FIG. 13 is a diagram for describing grouping of structures.
{FIG. 14} FIG. 14 is a diagram for describing the yield stress at a welded metal portion.

{Description of Embodiments}

[First Embodiment]

A nuclear-power-plant soundness evaluation system (hereinbelow simply, a "soundness evaluation system") according to a first embodiment of the present invention will be described below with reference to the drawings. In this embodiment, an example case where the soundness of a primary refrigerant pipe 3 of a reactor vessel 2 in a nuclear power plant 1, as shown in FIG. 1, is evaluated will be described. More specifically, an example case where the soundness of a butt-welded portion 4 in the primary refrigerant pipe 3, as shown in FIG.

2, is evaluated will be described. Note that, in FIG. 1, high-temperature, high-pressure water 5 supplied from the reactor vessel 2 flows through the primary refrigerant pipe 3 into a steam generator 6.

FIG. 3 is a schematic diagram showing the configuration of a soundness evaluation system 10 according to this embodiment. As shown in FIG. 3, the soundness evaluation system 10 mainly includes a stress-distribution calculating unit 11, a crack-growth prediction unit 12, a soundness maintenance unit 13, a stress distribution database 14, and a maintenance database 15.

The stress-distribution calculating unit 11 performs mesh division for residual stress analysis, as shown in, for example, FIGS. 4(a) and 4(b), and calculates the residual stress by means of thermo-elasto-plastic analysis, using this mesh division. For example, FIG. 5 shows an actual example of mesh division (solid lines in the figure) for the residual stress analysis of the butt-welded portion 4 in the primary refrigerant pipe 3 shown in FIG. 2 and an example of the residual stress distribution (dashed lines in the figure) calculated using this mesh division.

Note that the information necessary for the residual stress calculation, such as the size, material (including the physical quantities), welding conditions, and placement environment of an evaluation structure, is input and recorded by an operator, prior to the stress distribution calculation.

Herein, the stress-distribution calculating unit 11 has a stress distribution database 14 in which the threshold stress distribution at the time when a crack is generated for each structure and each position of the structure to be analyzed is stored. The threshold stress distribution stored in the stress distribution database 14 is formed by performing tests in advance.

The stress-distribution calculating unit 11 reads the threshold stress distribution corresponding to the currently evaluated evaluation structure from the stress distribution database 14, compares the read-out threshold stress distribution with the calculated residual stress distribution, and determines if there is a part where the residual stress exceeds the threshold stress. As a result of this comparison, if the residual stress is equal to or less than the threshold stress over the entire evaluation area, it is determined that no maintenance measure has to be taken on this evaluation occasion, and the calculation result obtained at this time is stored in a predetermined database (not shown).

On the other hand, if there is a part where the residual stress exceeds the threshold stress, information about that part and information about the calculated residual stress distribution are output to the crack-growth prediction unit 12.

The crack-growth prediction unit 12 sets the shape of the front edge (tip) of an initial crack at a position where a crack will be generated, specified by the stress-distribution calculating unit 11, and performs mesh redivision. For example, mesh redivision is performed according to the shape of the front edge of the initial crack such that nodes of the mesh are positioned on the front edge of the initial crack. Next, the residual stress calculated by the stress-distribution calculating unit 11 is superposed on this redivided mesh.

For example, when the shape of a front edge 13A of the initial crack is set as shown in FIGS. 4(c) and 4(d), mesh redivision is performed according to the shape of the front edge 13A of the initial crack such that nodes 14A of the mesh are positioned on the front edge 13A of the initial crack. Furthermore, at this time, the initial crack, i.e., nodes 14B in front (on the inner side) of the front edge 13A of the initial crack portion, is set at a position where it can be released later to make the crack grow (to simulate the initial crack). Then, the residual stress calculated by the stress-distribution calculating unit 11 is superposed on this redivided mesh. FIG. 6 shows an example of the actual mesh division (solid lines) resulting from this mesh redivision and an example of the initial residual stress distribution (dashed lines) superposed on this mesh division.

Next, the crack-growth prediction unit 12 calculates the residual stress when the initial crack, i.e., the node in front of the front edge of the initial crack portion, is released to introduce the initial crack and obtains a fracture mechanics parameter K (stress intensity factor), on the basis of this residual stress. In the case of an SCC crack, that is, when the growth of a crack due to continuous loading (for example, the internal pressure of a pipe) is to be analyzed, the fracture mechanics parameter K is calculated.

In the example shown in FIGS. 4(e) and 4(f), the nodes 14B in front of the front edge 13A of the initial crack are released. Note that, in FIGS. 4(e) and 4(f), open circles represent the nodes 14B, and dashed lines represent the meshes in the released portion. Then, the residual stress when the initial crack is introduced is calculated on the basis of this mesh division, and the fracture mechanics parameter K is obtained on the basis of this residual stress. This fracture mechanics parameter is obtained for each of the nodes on the front edge of the crack. FIG. 7 shows an example of the actual mesh division (solid lines) at this time and an example of the residual stress distribution (dashed lines) calculated on the basis of the mesh division.

After obtaining the residual stress distribution and the fracture mechanics parameter K in this manner, the crack-growth prediction unit 12 predicts the direction in which the crack will grow and the amount of growth from these pieces of information, using a predetermined crack growth rule. The crack growth rule is known and is expressed, for example, as Expression (1) below.

$$da/dT = C1 \cdot Km1 \quad (1)$$

In Expression (1), a denotes the amount of growth, T denotes the time, and C1 and m1 are constants. FIGS. 8(a) and 8(b) show an example of predicted crack growth. As shown in FIGS. 8(a) and 8(b), for example, the entire edge 13B of the crack after prediction is represented by a one-dot chain line. Note that the mesh division shown in FIGS. 8(a) and 8(b) is the same as that shown in FIGS. 4(e) and 4(f).

Next, the crack-growth prediction unit 12 regenerates a mesh according to the shape of the front edge of the crack after prediction such that the nodes of the mesh are positioned on the front edge of the predicted crack. In this case, as shown in, for example, FIG. 9, the nodes 14A and nodes 14C of the mesh are positioned on the front edge 13A of the crack before prediction and the front edge 13B of the crack after prediction, respectively, and the mesh may be regenerated according to the shapes of the front edge 13A of the crack before prediction and the front edge 13B of the crack after prediction.

Furthermore, the nodes in front (on the inner side) of the front edge of the crack after prediction, specifically, the nodes on the front edge of the crack before prediction and the nodes between the front edge of the crack before prediction and the front edge of the crack after prediction, are set such that they can be released later to make the crack grow. Although a mesh is regenerated such that the number of divided meshes between the front edge 13A of the crack before prediction and the front edge 13B of the crack after prediction is the same in the example shown in FIG. 9, it does not necessarily have to be so, and the mesh may be divided in any shape, and the number of the divided meshes does not have to be the same.

Next, the information quantities (state quantities), such as stress, strain, etc., of the immediately preceding mesh are superposed on a newly generated mesh. For example, the state quantities, such as stress, strain, etc., of the immediately preceding mesh, as shown in FIGS. 8(a) and 8(b), are superposed on a new mesh, as shown in FIGS. 8(c) and 8(d).

Next, the nodes in front of the front edge of the crack after prediction, specifically, the nodes on the front edge of the crack before prediction and the nodes between the front edge of the crack before prediction and the front edge of the crack after prediction, are released to simulate the crack growth. In this case, because the mesh was regenerated such that the nodes are located on the front edge of the crack after prediction, it is possible to release the nodes in front of the front edge of the crack after prediction, making the crack grow to the front edge of the crack after prediction in this manner. By releasing the nodes at this time, the stress acting on a portion in front of the front edge of the crack after prediction is released, and the stress acting on the front edge portion of the crack after prediction becomes maximum. Then, the fracture mechanics parameter K for this crack shape after growth is obtained. The fracture mechanics parameter K can be obtained at, for example, each node on the front edge of the crack.

In the example shown in FIGS. 8(e) and 8(f), the crack growth is simulated by releasing the nodes 14A on the front edge 13A of the crack before prediction. Note that, in FIGS. 8(e) and 8(f), open circles represent the released nodes 14A, and dashed lines represent the meshes in the released portion. Once the fracture mechanics parameter K on the new mesh is obtained, the direction in which the crack will grow and the amount of growth are predicted on the basis of the fracture mechanics parameter K. Then, by repeating the above-described processing, the crack is gradually made to grow.

FIG. 10 shows an example of the actual mesh division (solid lines) and an example of the stress distribution (dashed lines) when the crack has grown to half the thickness, t, of the pipe. Note that FIGS. 5 to 7 show examples of mesh division when the growth of a crack generated on the inner peripheral side of the butt-welded portion is to be analyzed, whereas FIG. 10 shows an example of mesh division when the growth of a crack generated on the outer peripheral side of the butt-welded portion 4 is to be analyzed. Furthermore, FIG. 10 shows only the right half of the mesh division with respect to the butt-welded portion 4 and omits the representation of the left half.

Although the fracture mechanics parameter "K" is used in the above-described example, another parameter "J", for example, may be used instead. For example, Japanese Unexamined Patent Application, Publication No. Hei 10-38829 discloses a crack-growth prediction method using the other parameter J, and the crack-growth prediction result may be obtained using this method. Furthermore, the method is not limited to those methods, but may be any method, as long as the crack growth is predicted on the basis of the stress distribution.

When the crack-growth prediction unit 12 has obtained the crack-growth prediction result in this manner, the result is supplied to the soundness maintenance unit 13. The soundness maintenance unit 13 has the maintenance database 15, in which a crack growth threshold and maintenance patterns associated with each other are stored. The crack growth threshold is a threshold by which it can be determined that the soundness of a target system will be maintained although a crack will have grown after the elapse of a predetermined period of time (for example, five years), and this crack growth threshold can be set in advance by performing tests and analyses. The soundness maintenance unit 13 selects a maintenance pattern A below when the crack-growth prediction result after the elapse of a predetermined period of time, obtained by the crack-growth prediction unit 12, is equal to or less than the crack growth threshold and selects a maintenance pattern B below when the result exceeds the crack growth threshold.

Maintenance pattern A: Continue operation and perform any one of the maintenance measures ($\alpha$) to ($\gamma$) below in the next inspection.

Maintenance pattern B: Immediately perform the maintenance measure (α) or (β).

Maintenance measures

(α) Repair

A part where the residual stress is high and a crack may occur and grow is removed using a machine, and the part is filled with a corrosion-resistant welding material or the like. This method is often employed when dealing with a problem and when the need for repair is high and the conditions for repair are relatively lenient.

(β) Replacement

A structure including a part where the residual stress is high and a crack may occur and grow is replaced with a substitute structure having reduced residual stress. This method is employed when (α) Repair, above, is difficult from the standpoint of the structure, or when it is determined that replacement of the structure is preferable as a result of lifetime evaluation of the target system.

(γ) Stress Relaxation

The stress acting on a part where the residual stress is high and a crack may occur and grow is reduced.
For example, when the soundness maintenance unit 13 selects the maintenance pattern A, and if there is a technology for repairing the object under maintenance and repair can be performed at lower cost and in a shorter time than other maintenance methods, the maintenance measure (α) is selected, and if the object under maintenance is located at a position where repair is difficult or there is no repairing technology and replacement with a substitute structure can be performed at lower cost and in a shorter time than other maintenance methods, the maintenance measure (β) is selected. The maintenance measures (α) and (β) require reform construction of the target system and tend to be a large-scale project. Therefore, if the stress, which may cause a crack, as well as the crack growth is to be removed from the structure while using the existing system, the maintenance measure (γ) is selected.
Furthermore, when the soundness maintenance unit 13 selects the maintenance pattern B, and if there is a technology for repairing the object under maintenance and the repair can be performed at lower cost and in a shorter time than other maintenance methods, the maintenance measure (α) is selected, and if the object under maintenance is located at a position where repair is difficult or if there is no repairing technology and replacement with a substitute structure can be performed at lower cost and in a shorter time than other maintenance methods, the maintenance measure (β) is selected.
For each of the maintenance patterns A and B, information about the object under maintenance sufficient to select one of (α) to (γ) above is input in advance to the soundness maintenance unit 13 by a user.
Note that, if the crack-growth prediction unit 12 determines that the crack will not grow and the soundness of the target system will be maintained even if the operation is continued for a predetermined period of time (for example, five years), then the soundness maintenance unit 13 determines that no maintenance measure has to be taken.
The soundness maintenance unit 13 selects either the maintenance patterns A and B or the lack of need for a maintenance measure on the basis of the crack-growth prediction result input from the crack-growth prediction unit 12. With the maintenance pattern A or B, when an appropriate maintenance measure is additionally selected, the selected maintenance pattern and the maintenance measure, if necessary, are displayed on a display device.
Then, the operator implements the maintenance measure by referring to the maintenance measure displayed on the display device.
It is also possible that the soundness maintenance unit 13 displays the maintenance pattern, which is selected on the basis of the crack-growth prediction result input from the crack-growth prediction unit 12, and the maintenance measures (α) to (γ) on the display device and lets a user select an appropriate maintenance measure.

[Second Embodiment]

Next, a nuclear-power-plant soundness evaluation system according to a second embodiment of the present invention will be described below with reference to the drawings.
Calculation of the residual stress distribution in, for example, the butt-welded portion 4 described as an example in the first embodiment is not so troublesome because the shape thereof is not so complicated. However, calculation of the residual stress distribution in a nuclear power plant at each time for each part requires great effort and time because a large number of parts with complicated shapes are used in the plant. For instance, core instrumentation pipes are one example. FIG. 11 is a schematic view of the core instrumentation pipes supported by a lower head, viewed from the bottom of a vessel in a reactor, and FIG. 12 is a schematic cross-sectional view showing the core instrumentation pipes welded to the reactor bottom.
As shown in FIG. 11, the lower head of the reactor vessel supports a plurality of core instrumentation pipes 54, through which sensors extend. As shown in FIG. 12, these core instrumentation pipes 54 penetrate through a reactor bottom 56, and the core instrumentation pipes 54 are fixed to the reactor bottom 56 by welding the contact surfaces between the reactor bottom 56 and the core instrumentation pipes 54.

The above-described crack growth evaluation is required for these welded portions, at which the core instrumentation pipes 54 are fixed to the reactor bottom 56. In particular, the lower portion of the reactor vessel is difficult to replace because it is integrated, by welding, with a reactor vessel body that accommodates the reactor core. Therefore, the crack growth evaluation has to be performed with high accuracy. However, because the reactor bottom 56 is bowl-shaped, the stress distribution varies depending on the attaching angle of the core instrumentation pipes 54 to the reactor bottom 56. Thus, calculation of the stress distribution for each welded portion requires great effort and time.

This embodiment provides a soundness evaluation system that enables easy and quick calculation of the stress distribution for each structure, even if the structure has such a complicated shape that the stress distribution varies depending on the position.
The nuclear-power-plant soundness evaluation system according to this embodiment will be described below, focusing on the configurations differing from the above-described soundness evaluation system according to the first embodiment and omitting the configurations in common therewith.

In the soundness evaluation system according to this embodiment, the stress-distribution calculating unit according to the first embodiment, shown in FIG. 3, has a different function. That is, in the above-described first embodiment, the stress-distribution calculating unit performs elasto-plastic analysis on the soundness-evaluation target and calculates the residual stress each time, whereas in this embodiment, the stress-distribution calculating unit performs elasto-plastic analysis in advance and holds the results thereof as the database.

The database will be described below.
First, the connecting portions of the core instrumentation pipes 54, shown in FIGS. 11 and 12, are virtually subjected to heat (predetermined distortion), and the sensitivity (elasticity) at this time is analyzed to evaluate the stress caused by being subjected to heat. This elasticity analysis can be performed easily and quickly because the plastic deformation is not taken into account.

Next, the elasticity analysis results are compared with one another, and the core instrumentation pipes that exhibit similar elasticity analysis results are grouped. As a result, as shown in FIG. 13, for example, five groups I to V are formed.
Then, one representative core instrumentation pipe is selected from each of the groups I to V, elasto-plastic analysis is performed on the selected core instrumentation pipes to calculate the stress distributions, and the stress distribution data associated with the groups are stored in the database.
When actually calculating the residual stress, the stress distribution of the group that includes the core instrumentation pipe to be evaluated is acquired from the database, and the soundness evaluation is performed using this stress distribution.

As has been described above, in this embodiment, the elasticity analysis is performed on a plurality of parts, the parts that exhibit similar elasticity analysis results are grouped, and elasto-plastic analysis is performed on each group in advance to obtain the stress distribution. Thus, when actually calculating the stress distribution, it is only necessary to acquire the information from the database. Thus, the stress distribution can be acquired easily and quickly. Although the description has been given taking the core instrumentation pipes 54 as an example in this embodiment, the parts for which the database is formed is not limited to the core instrumentation pipes 54. For example, it can be applied to a case where there are a plurality of similar structures whose stress distribution varies depending on the position.

Sometimes a detailed stress distribution cannot be obtained when calculating the stress distribution. In such cases, the evaluation can be performed by assuming that the stress value of the welded metal portion is equivalent to the yield stress, without calculating the stress distribution. For example, as shown in FIG. 14, the residual stress in the welded portion is equivalent to the yield stress at the upper portion thereof, whereas it is small at the lower portion thereof. Although there is such a difference, the crack growth evaluation is performed by regarding them, as a whole, as the yield stress. Herein, the yield stress is obtained from the physical quantities of the evaluation structure.

As has been described, by assuming that the stress distribution of the evaluation target structure is equivalent to the yield stress, the need for the stress calculation is eliminated, achieving a significant reduction in time. {Reference Signs List}

10    soundness evaluation system
11    stress-distribution calculating unit
12    crack-growth prediction unit
13    soundness maintenance unit
14    stress distribution database
15    maintenance database

**Claims**

1.  A nuclear-power-plant soundness evaluation system comprising:

    a stress-distribution calculating unit that calculates a residual stress distribution in a soundness evaluation structure and that, when it is determined that a crack will occur on the basis of the stress distribution, outputs the calculated stress distribution and an identified crack generating part;
    a crack-growth prediction unit that predicts how the crack will grow from the crack generating part, on the basis of the information about the stress distribution and the identified crack generating part output from the stress-distribution calculating unit, and outputs a prediction result; and

a soundness maintenance unit that has a database in which crack-growth prediction results and maintenance measures are associated, reads out from the database a maintenance measure corresponding to the crack-growth prediction result output from the crack-growth prediction unit, and presents the read-out maintenance information to a user.

2. The nuclear-power-plant soundness evaluation system according to Claim 1, wherein
the stress-distribution calculating unit has a database in which groups and stress distributions are stored in association with each other, the groups being formed by, when a plurality of identical structures exist, performing elasticity analysis on these structures in advance and grouping the structures with similar elasticity analysis results, and the stress distributions being obtained by performing elasto-plastic analysis on a structure in each group, and
the residual stress distribution in the soundness evaluation structure is acquired from the database.

3. The nuclear-power-plant soundness evaluation system according to Claim 1, wherein the stress-distribution calculating unit obtains the residual stress distribution by assuming that the residual stress in the soundness evaluation structure is equivalent to the yield stress.

# FIG. 1

# FIG. 2

## FIG. 3

EP 2 518 470 A1

FIG. 4

( a )

( b )

←D

←D

( c )

( d )

←E

NODE
14A

13A
FRONT
EDGE OF
CRACK

14A

14A

←E

14A

NODE 14B

( e )

( f )

←F

14A

NODE
14A

13A
FRONT
EDGE OF
CRACK

14B

14A 14B ←F 14A

FIG. 5

FIG. 6

FIG. 7

FIG. 8

(a)

(b)

←G

13B
FRONT EDGE
OF CRACK
(AFTER
PREDICTION)

←G   13A
FRONT EDGE OF CRACK
(BEFORE PREDICTION)

(c)

14C

14A

(d)

←H

NODE
14C

13B

14C 14A   ←H   13A   14C
14A
14A NODE

(e)

14C

14A

(f)

←I

14C

13B

14A
14C 14A   ←I   13A   14C
14A

## FIG. 9

14C
13B
FRONT EDGE OF CRACK
AFTER PREDICTION

14A

13A
FRONT EDGE OF CRACK
BEFORE PREDICTION

## FIG. 10

INNER
PERIPHERAL
SIDE

FRONT EDGE
OF CRACK

WELDED
PORTION

THICKNESS
t

BOUNDARY
BETWEEN
WELDED
PORTION
AND PIPE

OUTER
PERIPHERAL
SIDE

FRONT EDGE
OF CRACK

# FIG. 11

# FIG. 12

# FIG. 13

I II IIIIV V

# FIG. 14

STRESS DISTRIBUTION

LARGE (= YIELD STRESS)

SMALL

## INTERNATIONAL SEARCH REPORT

| | International application No. |
|---|---|
| | PCT/JP2010/073364 |

A.  CLASSIFICATION OF SUBJECT MATTER
*G01N17/00*(2006.01)i, *G01M99/00*(2011.01)i, *G21C17/00*(2006.01)i, *G21C17/003* (2006.01)i, *G21D1/00*(2006.01)i

According to International Patent Classification (IPC) or to both national classification and IPC

B.  FIELDS SEARCHED

Minimum documentation searched (classification system followed by classification symbols)
G01N17/00, G01M99/00, G21C17/00, G21C17/003, G21D1/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2008-003009 A  (Toshiba Corp.),<br>10 January 2008 (10.01.2008),<br>paragraphs [0029], [0035] to [0069]; fig. 2<br>(Family: none) | 1<br>3<br>2 |
| Y | JP 2006-131937 A  (Kobe Steel, Ltd.),<br>25 May 2006 (25.05.2006),<br>paragraphs [0020] to [0021]<br>(Family: none) | 3 |
| A | JP 2003-302331 A  (Mitsubishi Heavy Industries, Ltd.),<br>24 October 2003 (24.10.2003),<br>entire text; all drawings<br>(Family: none) | 1-3 |

| ☒ Further documents are listed in the continuation of Box C. | ☐ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 February, 2011 (10.02.11) | 22 February, 2011 (22.02.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/073364

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2009-036669 A  (Toshiba Corp.),<br>19 February 2009 (19.02.2009),<br>entire text; all drawings<br>(Family: none) | 1-3 |

Form PCT/ISA/210 (continuation of second sheet) (July 2009)

**EP 2 518 470 A1**

**Patent documents cited in the description**

- JP 2004340898 A
- JP HEI1038829 B